(19) Europäisches Patentamt
European Patent Office
Office européen des brevets

(11) Publication number: **0 071 968**
**B1**

# (12) EUROPEAN PATENT SPECIFICATION

(45) Date of publication of patent specification: **16.04.86**

(51) Int. Cl.[4]: **C 08 L 101/00,** D 01 F 6/88

(21) Application number: **82107014.1**

(22) Date of filing: **03.08.82**

## (54) Thermoplastic composition containing oligomer.

(30) Priority: **03.08.81 US 289619**

(43) Date of publication of application:
**16.02.83 Bulletin 83/07**

(45) Publication of the grant of the patent:
**16.04.86 Bulletin 86/16**

(84) Designated Contracting States:
**DE FR GB IT NL**

(56) References cited:
**EP-A-0 041 327**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Prevorsek, Dusan Ciril**
**21 Harwich Road**
**Morristown New Jersey 07960 (US)**
Inventor: **Akkapeddi, Murali Krishna**
**40 Whitewood Drive**
**Morris Plains New Jersey 07950 (US)**

(74) Representative: **Baillie, Iain Cameron et al**
**c/o Ladas & Parry Isartorplatz 5**
**D-8000 München 2 (DE)**

**EP 0 071 968 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

The present invention relates to thermoplastic compositions, and especially to compositions containing a crystallizable thermoplastic which is itself isotropic (non-liquid crystalline) with an oligomeric thermotropic (liquid crystalline in the melt) additive.

Various additives have been proposed to crystallizable isotropic thermoplastics such as polyamides (e.g. nylon 6) and polyesters (e.g. poly(ethyleneterephthalate)) which are intended to improve the physical properties of fibers or films found therefrom. Such additives include inorganic materials, small organic compounds and large polymers with which the isotropic thermoplastic is coextruded or otherwise blended. With the discovery of thermotropic polyesters, as described, for example, in U.S. Patents 4,140,846 to *Jackson, Jr. et al.* (February 20, 1979), 3,890,256 to *McFarlane et al.* (June 17, 1975), 3,991,013 to *Pletcher* (November 9, 1976), 4,066,620 to *Kleinschuster et al.* (January 3, 1978), 4,075,262 to *Schaefgen* (February 21, 1978), 4,118,372 to *Schaefgen* (October 3, 1978) and 4,156,070 to *Jackson, Jr. et al.* (May 22, 1979), some proposals have been made to blend these materials with isotropic polymers. Unfortunately, thermotropic polymers have thus far proved incompatible with isotropic polymers, with the heterogeneous blends that are formed exhibiting properties no better than the isotropic polymers alone.

In particular, M. Takayanagi et al. in *J. Macromol. Sci,—Phys.*, B17(4), pp. 591—615 (1980) report attempts to blend nylon-6 or nylon-66 with wholly aromatic polyamides such as poly-p-benzamide or their block copolymers with nylon-6 or nylon-66. The wholly aromatic polyamides used are infusible.

M. Wellman et al., Division of Coating and Plastics Preprints, American Chem. Soc., vol 43, pp 783—87 (1980) report blending of rod-like polymers with similar coil-like polymers, both having monomers with fused ring structures (e.g. poly-para-phenylene benzobisthiazole and poly-2,5(6) benzimidazole). Again the rigid polymer is infusible.

Brief description of the invention

It has been discovered that thermotropic oligomers are compatible to some extent with isotropic crystallizable polymers, and that mixtures of the two do form fibers, and presumably other fabricated forms such as films, with improved properties compared to the isotropic polymer alone. These improved properties result even when microscopic evaluation shows substantial heterogeneity.

Accordingly, the present invention includes a thermoplastic composition comprising:

a) a thermoplastic polymer of high molecular weight which has a fusion temperature at a first temperature, has a glass transition temperature and forms an isotropic liquid above the first temperature, and

b) dispersed in said thermoplastic polymer an oligomer having a melting point at a second temperature, said second temperature being not more than 50°C less than said first temperature, nor more than 70°C more than said first temperature; said oligomer exhibiting thermotropic behavior between said second temperature and a third temperature and said third temperature being at least 30°C above said second temperature and at least 10°C above said first temperature; said oligomer having a length/diameter ratio (L/D) of at least 10, a glass transition temperature at least 10°C greater than the glass transition temperature of said polymer and a Small's solubility parameter within 2 of the Small's solubility parameter of said polymer;

the amount of said oligomer being sufficient to raise the modulus value of the thermoplastic composition to at least 110% of the corresponding value of the polymer at the glass transition temperature of said polymer.

Detailed description of the invention

The present invention includes thermoplastic compositions of a thermoplastic polymer and a thermotropic oligomer. The thermotropic oligomer differs from the rod-like reinforcing materials of *Takayanagi et al.* and *Wellman et al* in being fusible (i.e. having a melting point as specified in the Brief Description). The salient features of the oligomer are its melting point, its temperature range for thermotropic behavior, its glass transition temperature and its Small's solubility parameter (as described below).

The oligomer should have a melting point (the second temperature) reasonably close to the fusion temperature of the polymer (the first temperature). The second temperature may be up to 70°C more or 50°C less than the first temperature, but is preferably no more than about 20°C more or 20°C less than the first temperature.

The oligomer should exhibit thermotropic behavior, i.e. liquid crystalline or anisotropy in the melt, between the second temperature and a third temperature. Thus the second temperature represents a transition between the solid state and the nematic liquid crystalline state. The third temperature should be at least 30°C above the second temperature and at least 10°C above the first temperature. That is, for example, if the polymer's fusion temperature is 250°C and the oligomer's melting point is 270°C, thermotropic behavior should be exhibited by the oligomer between 270°C and 300°C. If, however, the polymer's fusion temperature is 250°C and the oligomer's melting point is 220°C, thermotropic behavior should be exhibited between 220°C and 260°C.

The oligomer should have a length/diameter ratio (L/D) of at least 10. In the preferred embodiment, the oligomer has a L/D of between 10 and 50.

The oligomer should also have a glass transition temperature at least 10°C and preferably at least 20°C above the glass transition temperature of the polymer. This enables the composition to exhibit a glass transition temperature higher than that of the polymer alone, and thus improve the dimensional stability of the composition.

Finally the oligomer and polymer should have monomers which enhance their compatibility in a chemical sense even though the rod-like nature of the oligomer may prevent true compatibility, at least under equilibrium conditions. A convenient measure of mutual compatibility of the two materials is the Small's solubility parameter calculated in accordance with the Small's Table of Molar Attraction Constants (P.A. Small, J. Appl. Chem., vol. 3, 71 (1953). An example of such a calculation is given in Example 31.

The nature and amount of the oligomer should be sufficient to improve the tensile modulus of the composition compared to the polymer alone, especially at high temperatures such as at the glass transition temperature of the polymer. While modulus may be measured by various techniques including tensile modulus (Instron Tensile Tester) or dynamic modulus (Dynamic Mechanical Analyzer), it is convenient to measure tensile modulus. In such a test, the modulus of the composition at the glass transition temperature of the polymer should be at least 110%, preferably at least about 125% and more preferably at least about 130%, of the corresponding value of the polymer alone. Such compositions will also exhibit smaller proportional increase in modulus at lower temperatures including room temperature, and increasingly greater proportional increases in modulus at higher temperatures.

The present invention is applicable to a broad spectrum of thermoplastic polymers of high molecular weight including polyesters, polyamides, polycarbonates, polyethers and poly(acetals). The only requirements are that the polymer have a glass transition temperature and a fusion temperature and act as an isotropic (non-liquid crystalline) liquid above its fusion point. In the case of crystalline polymers, the fusion temperature is referred to as the melting point of the polymer. The invention is particularly applicable to polyesters such as poly(alkylene terephthalate) polymers with alkylene of 2—4 carbons such as poly(ethylene terephthalate) (PET) and poly(butylene)terephthalate (PBT). It is also applicable to polyamides such as the well-known nylon-6, nylon-66 and the like, which can be constructed from aliphatic monomers which are either diacids or diamines, or are aminoacids, or have combinations of all three monomers.

Polyester oligomers are preferred, especially when the polymer is a polyester such as PET or PBT. Preferred polyester oligomers have residues selected from those of the formulae:

$$\underset{\text{I}}{-\overset{\overset{\displaystyle O}{\|}}{C}-} \qquad \underset{\text{II}}{-O-R-O} \qquad \underset{\text{III}}{-O-R'-\overset{\overset{\displaystyle O}{\|}}{C}-} \qquad \underset{\text{IV}}{-\overset{\overset{\displaystyle O}{\|}}{C}-R''-\overset{\overset{\displaystyle O}{\|}}{C}-}$$

with the moles of I+IV=moles of II and wherein R, R' and R'3 are each 1,4-phenylene, 2,5-naphthalene, 2,6-napththalene, 1,4-cyclohexyl, 4,4'-biphenyl, 2,6-anthracene-9,10-dione or any of them substituted by alkyl, aryl, fluoro, chloro, bromo or alkoxy.

In the particularly preferred embodiments said residues are terephthaloyl or substituted terephthaloyl,, substituted hydroquinone and an additional biphenol wherein R is 4,4'-biphenyl or hydroquinone, each unsubstituted or substituted by methyl, chloro or *t*-butyl.

With polyamide polymers, preferred oligomers include N-substituted polyamides, polyesters, poly(ester amides) and poly(ether amides).

Example 1

Preparation of poly(methyl hydroquinone terephthalate—co-2,6 naphthalene dicarboxylate) (MHQ-TPA/NDA):—

A solution of methyl hydroquinone (248 g, 2 moles) and o-cresol (6.5 g, 0.06 mole) in pyridine (450 ml) and dichloromethane (1000 ml) was filtered and charged into a 12 liter reaction flask. In a separate flask was prepared a solution of 2,6 naphthalenedicarbonyl chloride (152 g, 0.6 mole) and terephthaloyl chloride (284 g, 1.4 moles) in a mixture of dichloromethane (3000 ml) and 1,2 dimethoxyethane (500 ml) by stirring under gentle reflux. The solution was filtered hot and the warm solution (38—40°C) was added dropwise with stirring to the first solution in the reaction flask. After the addition was complete (1 hour) the contents were left stirring for an additional period of two hours. The reaction mixture in the form of a slurry was added to excess isopropanol (6 liters) with good agitation. The precipitated oligomer was filtered, washed repeatedly with hot water, filtered and dried. Yield: 97%. The intrinsic viscosity [η] was about 0.4 dl/g measured in phenol-TCE (60/40) (a mixture of phenol and 1,1,2,2-tetra-chloroethane, usually in a 60/40 weight ratio, used for measurement of solution viscosity of polyesters). The material melted at about 245—270°C as observed on a hot stage polarizing microscope. The melt exhibited thermotropic liquid crystallinity, i.e. showed birefringence under polarizing light and color bands and orientation upon shearing.

DSC analysis (differential scanning calorimetric analysis used for measurement of thermal transitions (glass transition, melting temperatures) in polymers) (heating rate=20°C/min) showed a broad melt endotherm at about 252°C in the initial heat. The glass transition temperature upon reheating after quenching from 315°C was about 86°C.

Example 2

Following the general procedure of example 1, but decreasing the chain terminator (o-cresol) concentration to 5 g (0.05 mole), an oligomer of same composition but of intrinsic viscosity of about 0.6 dl/g was obtained. The oligomer melted at about 260—290°C, forming a liquid crystalline melt. DSC analysis indicated a broad melting endotherm, in this initial heat, at 276°C. The glass transition temperature upon reheating after quenching from 315°C was about 89°C.

Other examples of oligomers of the same composition were obtained by varying this chain terminator concentration. Table 1 summarizes the effect of reduced viscosity of the oligomer on the melt temperature (Tm, temperature at which complete complete fusion occurs)

TABLE 1
MHQ-TPA/NDA (70/30) Oligomers

| Example | $\eta_{red}$ (dl/g) | Tm (°C) |
|---|---|---|
| 1 | 0.26 | 240 |
| 2 | 0.42 | 265 |
| 3 | 0.48 | 275 |
| 4 | 0.63 | 290 |
| 5 | 1 | 310 |

Example 6

Poly(3,3′,5,5′ tetramethyl-4,4′-dihydroxybiphenyl-trimethylhydroquinone (50/50)-chloroterephthalate) (TMDB-TMHQ-ClTPA):—

A mixture of 3,3′,5,5′ tetramethyl-4,4′-dihydroxybiphenyl (242 g, one mole), trimethyl hydroquinone (152 g, 1 mole), 2,6-dimethylphenol (15 g, 0.125 mole), dichloromethane (3500 ml) and pyridine (800 ml) was stirred under nitrogen until a clear solution was obtained. The solution was filtered into a 12 liter reaction flask and then treated dropwise while stirring, with a solution of chloroterephthaloyl chloride (474 g, 1 mole) in dichloromethane (2000 ml). After the addition was complete (1 hour), the contents were left stirring overnight (18 hours). The thick slurry of this polymer was precipitated into isopropanol (15000 ml) with agitation. The precipitate was filtered, washed repeatedly with boiling water and dried under vacuum. Yield=98%. The reduced viscosity of the polymer was 0.68 dl/g. The material melted at about 280°C, when observed under hot stage microscope. The melt exhibited thermotropic liquid crystallinity under polarized light with characteristic birefringence and shear induced orientation and color band formation. DSC analysis indicated a glass transition temperature of about 120°C upon reheating after quenching from 350°C. Two small and broad melt endotherms were observed at 250° and 290°C respectively.

The general procedure of example 6 was used to obtain other examples of oligomers with reduced viscosities ranging from 0.27 to 1.3 dl/g by variation of chain terminator (2,6-dimethylphenol) concentration from 5 to 15 mole %. The melting temperature of these oligomers varied from about 210°C to about 305°C as shown in Table 2.

TABLE 2
TMDB-TMHQ (50/50)-ClTPA Oligomers

| Example | $\eta_{red}$ (dl/g) | Tm (°C) |
|---|---|---|
| 6 | 0.68 ($\overline{M}_w$=6000) | 240 |
| 7 | 0.27 | 210 |
| 8 | 0.5 | 255 |
| 9 | 1.1 | 295 |
| 10 | 1.3 ($\overline{M}_w$=13000) | 305 |

Example 11

A solution of 3,3',5,5' tetramethyl 4,4' dihydroxybiphenyl (235 g, 0.97 mole) and 2,6 dimethylphenol (10 g, 0.08 mole) in a mixture of pyridine (450 g) and dichloromethane (2000 g) was prepared by stirring under nitrogen. To this solution was added dropwise, with stirring, a solution of bromoterephthaloylchloride (275 g, 0.978 mole) in dichloromethane (1000 ml). After the addition was complete (1 hour), the stirring was continued for 3 hours. The contents were poured into 12 liters of methanol. The precipitate was filtered, washed and dried (yield=96%). The reduced viscosity of the oligomer was about 0.23 dl/g. The weight average molecular weight (Mw) was about 3200. The melt temperature was 290—320°C, as observed on a hot stage microscope. The melt was birefringent and oriented upon shearing. DSC analysis indicated a glass transition temperature of about 115°C upon reheating after quenching from 350°C.

Following the general procedure of example 11 a number of other oligomer samples of same composition but of different molecular weights were prepared by varying the chain terminator and monomer concentrations (Table 3).

TABLE 3

| Example | $\eta_{red}$ (dl/g) | Mw | Tm (°C) |
|---|---|---|---|
| 11 | 0.21 | 3200 | 290—320 |
| 12 | 0.12 | 2000 | 215—240 |
| 13 | 0.18 | 2600 | 260—280 |
| 14 | 0.33 | 5000 | >340 with decomposition |
| 15 | 0.52 | 8620 | Infusible before decomposition |
| 16 | 0.6 | 10,000 | Infusible before decomposition |

Example 17

Following the general procedure of example 11 a number of thermotropic oligomeric polyesters from 3,3',5,5' tetramethoxy 4,4' dihydroxybiphenyl and bromoterephthaloyl chloride were prepared using 2,6-dimethoxyphenol as chain terminator. An oligomer of $[\eta]=0.13$ melted at 260—280°C while another oligomer of same composition but of $[\eta]=0.2$ melted at 280—310°C. Both samples showed a glass transition temperature at 148° upon reheat after quenching from 350°C. Oligomers of $[\eta]=0.3$ or greater did not fuse below their decomposition temperature of about 350°C.

Example 18

Melt spinning of PET and thermotropic oligomer blends.

A 13% dry blend of PET powder (35—200 mesh) and the oligomer powder from example 1 was prepared in a Henschel mixer, dried at 160°C and 0.1 mm Hg (13 Pa) for 18 hrs. The powder was then melt blended at 280°C in a Sterling Extruder using a mixing screw (1" or 2.54 cm diameter, L/d=21). A modified tubular hopper with nitrogen attachment was used to facilitate the feeding of powders with minimal exposure to atmosphere. The extrudate was quenched in a water bath and pelletized. The blended pellets were redried at 160°C for 18 h, and then melt spun at 265—290°C in the same extruder, using a 32 hole spinneret (0.053 cm diameter×0.106 cm capillary length) into a quench stack, while a heated sleeve (15 cm diameter×30 cm long) close to the die exit was used to maintain a wall temperature of 315°C. The yarn was taken up at speeds of about 280 m/min while the extrusion rates were typically 2 to 2.5 kg/h. Conventional polyester spin finish was applied to the yarn during the take up. The yarn was drawn 6 to 7.5:1 on a draw frame consisting of a toproller at 100°C, heated block at 185°C and a bottom roller at 200°C. The drawn yarn was taken up at a speed of about 245 m/min. The final denier of the yarn was about 5 denier/fil.

The dispersed phase in the yarn was examined by transmission electromicroscopy on thin sections (cross section as well as longitudinal) obtained by embedding the yarn in Maraglas® 4 epoxy and sectioning with an ultra-microtone. The dispersed phase was generally of the order of 20—300 nm and was found to be ellipsoidal in shape with an L/d=5. A third phase of higher electron density was also formed at the interface of the dispersed particles as well as a separate phase by itself. This was presumed to be either a dissolved phase or partially reacted phase consisting of both PET and the thermotropic oligomer compositions. In the case of PET blends with TMDB-TMHQ-ClTPA oligomer (from example 10) only two phases could be detected and the dispersed phase was smaller in size. The tensile properties of the blend yarns are summarized in Table 4. The initial modulus (at 0% strain) of PET is increased by 33% (Example 21) to 57% (example 22), by the addition of 13—14% thermotropic oligomer. The secant modulus (Modulus

at a specific strain level, e.g., secant modulus at 1% strain level=stress (load) at that strain level divided by 0.01=100 times the stress) of the blend yarns at higher strain levels (0.5 to 2%) were also higher than those of PET. The modulus improvement was also observed at higher temperatures; e.g. for the yarn in example 18, the modulus at 150°C was 65% higher than that of PET yarn. The shrinkage behavior of PET was considerably improved by about 50% with thermotropic oligomer additive in example 18.

TABLE 4
Tensile properties of Pet and thermotropic blend yarns at 23°C

| Example* | Composition | UTS ($gd^{-1}$) | UE (%) | T.M. ($gd^{-1}$) at strain 0% | 0.5% | 1% | 2% |
|---|---|---|---|---|---|---|---|
| 18 | PET+13% oligomer from example 2 | 6.92 | 10 | 189 | 172 | 133 | 96 |
| 19 | PET+13% oligomer from example 2 | 6.7 | 9.7 | 198 | 170 | 140 | 93 |
| 20 | PET+13% oligomer from example 3 | 7.4 | 8.5 | 205 | 175 | 140 | 105 |
| 21 | PET+13% oligomer from example 3 | 7.44 | 9 | 187 | 185 | 157 | 113 |
| 22 | PET+14% oligomer from example 3 | 6.5 | 8.5 | 220 | 180 | 150 | 110 |
| 23 | PET+13% oligomer from example 6 | 7.6 | 9 | 209 | 175 | 145 | 107 |
| 24 | PET control ([η] =0.71) | 8.1 | 12 | 140 | 130 | 110 | 79 |
| 25 | PET tire yarn ([η] =0.86) | 8.5 | 15 | 130 | 130 | 110 | 75 |

* All spun at 282°C except example 18 which was spun at 250°C.
UTS=ultimate tensile strength;
U.E.=ultimate elongation
T.M.=tensile modulus at room temperature measured in accordance with Example 26

Example 26
Measurement of tensile properties

The tensile properties of the yarn (other than modulus) were determined in an Instron Tensile Tester at 50% relative humidity using a 12.7 cm gauge length and 2.27 kg full scale load and an extension rate of 100% per minute. The tensile modulus at 0% to 2% elongations were determined using expanded stress-strain curves obtained on the same instrument using a 0.908 kg full-scale load and the same stress rate and gauge length. The stress $gd^{-1}$ (g/denier) at these corresponding elongations was measured and divided by the percent elongation to obtain the modulus data.

Example 27

The fibers of examples 18, 19, 23, 24 and 25 (the latter being a PET control and a commercial PET tire yarn) were placed in a constant temperature chamber at 23°C, 90°C, 120°C and 150°C and the tensile modulus was again measured as indicated in Example 25 with the 0.908 kg load. The results, displayed in Table 5, demonstrate the improved modulus retention of the fibers of the present invention, increasing proportionately above the approximately 70°C glass transition temperature of PET.

TABLE 5

| Example | 23°C | 90°C | 120°C | 150°C |
|---|---|---|---|---|
| 18 | 189 | 103 | 47 | 22 |
| 19 | 197 | 89 | — | 21 |
| 23 | 209 | 87 | — | 15.6 |
| 24 | 140 | 75 | — | 9.1 |
| 25 | 130 | 76 | — | 8.5 |

Example 28

The fibers of Examples 17 and 22 (the latter being a PET Control) were clamped in a Perkin Elmer thermomechanical analyzer in a helium atmosphere at nominal load and heated at 10°C/min. The length of the fiber was recorded and is indicâted in Table 6 as a percent shrinkage.

TABLE 6
Shrinkage behavior of PET and PET thermotropic oligomer blend yarns
Analytical method—Thermomechanical analysis (TMA) at zero load (nominal) and at a heating rate=10°C/min

| T (°C) | % Shrinkage PET control (Example 22) | % Shrinkage PET & oligomer blend (Example 17) |
|---|---|---|
| 40 | 0 | 0 |
| 50 | 0 | 0 |
| 60 | 0 | 0 |
| 70 | 0 | 0 |
| 80 | 0.06 | 0 |
| 90 | 0.19 | 0 |
| 100 | 0.52 | 0.13 |
| 110 | 1 | 0.58 |
| 120 | 2.4 | 1.1 |
| 130 | 4.3 | 2 |
| 140 | 5.9 | 2.8 |
| 150 | 7.7 | 3.7 |
| 160 | 9.5 | 4.7 |
| 170 | 11.6 | 5.7 |
| 180 | 14.4 | 6.8 |
| 190 | 17.4 | 7.9 |
| 200 | 20.6 | 9.4 |
| 210 | 23.9 | 11 |
| 220 | 32.3 | 14.5 |

Example 29

Preparation of Poly(t-butyl hydroquinone-co-methylhydroquinone (50/50) terephthalate) (t-BuHQ-MHQ (50/50%)-TPA)

A solution of t-butyl hydroquinone (664 g, 4 moles), methyl hydroquinone (488 g, 4 moles) and 2-t-butylphenol (35 g, 0.23 mole) in pyridine (1600 mL) was treated with a solution of terephthaloyl chloride (1624 g, 8 moles) in dichloromethane (10.5 liters) by dropwise addition with vigorous stirring. After the addition was complete in about 2.5 hours, the contents were left stirring for an additional period of 18 hours. Then the reaction mixture was precipitated into 30 liters of acetone-water mixture (7:1) in a stirred tank. The precipitated oligomer was filtered, washed successively with aqueous acetone (30 liters) hot water (40 liters, 3 times) and finally dried under vacuum at 120°C/0.5 mm Hg. The yield was 80%; the reduced viscosity of the oligomer was 0.3 dl/g. The material softened at 250°C and melted at about 270°C. The melt exhibited thermotropic liquid crystallinity under polarized light. DSC analysis indicated a broad melting endotherm centered around 242°C. Reheating after quenching from 300°C showed a $T_g$=140°C and $T_m$=250°C, 285°C. [η]=0.27. This material is expected to provide improved modulus values when blended with poly(ethylene terephthalate).

Example 31

Small's Solubility Parameters

Employing Small's Table of Molar Attraction Constants, the parameters for poly(ethylene terephthalate) and the oligomer of Example 1 were calculated. PET has a density of 1.33 and a molecular weight of repeat unit of 192, and thus a molar volume of 144. The oligomer has a density of about 1.4, a molecular weight of repeat unit of 269 and thus a molar volume of about 192.

| Group | F (Molar attractive constant) | |
|---|---|---|
| 2 $-CH_2-$ | 2×133 | 266 |
| phenyl | | 658 |
| 2 COO— | 2×310 | 620 |
| | | 1544÷144=10.7 for PET |
| $-CH_3$ | | 214 |
| 1.7 phenyl | 1.7×658 | 1118.6 |
| 2 COO— | 2×310 | 620 |
| 0.3 naphthyl | 0.3×1146 | 344 |
| | | 2296.6÷192=11.96 for oligomer |

The difference in parameters is 1.26 or less than 2.

## Claims

1. A thermoplastic composition comprising:

a) a thermoplastic polymer of high molecular weight which has a fusion temperature at a first temperature, has a glass transition temperature and forms an isotropic liquid above the first temperature, and

b) dispersed in said thermoplastic polymer an oligomer having a melting point at a second temperature, said second temperature being not more than 50°C less than said first temperature nor more than 70°C more than said first temperature; said oligomer exhibiting thermotropic behavior between said second temperature and a third temperature, said third temperature being at least 30°C above said second temperature and at least about 10°C above said first temperature; said oligomer having a number average length/diameter ratio (L/D) of at least 10, a glass transition temperature at least 10°C greater than the glass transition temperature of said polymer and a Small's solubility parameter within 2 of the Small's solubility parameter of said polymer;

the amount of said oligomer being sufficient to raise the modulus value of the thermoplastic composition to at least 110% of the corresponding value of the polymer at the glass transition temperature of said polymer.

2. The thermoplastic composition of claim 1 wherein said thermoplastic polymer is a poly(alkylene arylate).

3. The thermplastic composition of claim 2 wherein said thermoplastic polymer is a poly(alkylene terephthalate), said alkylene having 2—4 carbons.

4. The thermoplastic composition of claim 1, 2 or 3 wherein said oligomer is a polyester having residues selected from:

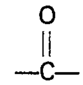 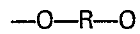 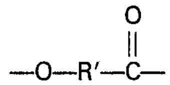 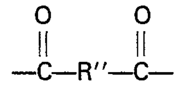

I II III IV

with the moles of I+IV=moles of II and wherein R, R′ and R″ are each 1,4-phenylene, 2,5-naphthalene, 2,6-napththalene, 1,4-cyclohexyl, 4,4′-biphenyl, 2,6-anthracene-9,10-dione or any of them substituted by alkyl, aryl, fluoro, chloro, bromo or alkoxy.

5. The thermoplastic composition of claim 4 wherein said residues are terephthaloyl or substituted terephthaloyl, substituted hydroquinone and an additional biphenol wherein R is 4,4′-biphenyl or hydroquinone, each unsubstituted or substituted by methyl, chloro or t-butyl.

6. The thermoplastic composition of any previous claim wherein L/D is between 10/1 and 50/1.

7. The thermoplastic composition of any previous claim wherein the glass transition temperature of said oligomer is at least 20°C greater than that of said polymer.

8. The thermoplastic composition of claim 1 wherein said polymer is a polyamide.

9. The thermoplastic composition of claim 8 wherein said oligomer is a thermotropic polyester.

10. The thermoplastic composition of claim 8 wherein said oligomer is a thermotropic poly(ester amide).

**Patentansprüche**

1. Thermoplastische Zusammensetzung mit

a) einem thermoplastischen Polymer, das ein hohes Molekulargewicht hat, dessen Schmelztemperatur bei einer ersten Temperatur liegt und das eine Einfriertemperatur hat und oberhalb der ersten Temperatur eine isotrope Flüssigkeit bildet, und

b) einen in dem thermoplastischen Polymer dispergierten Oligomer, das einen Schmelzpunkt bei einer zweiten Temperatur hat, die um nicht mehr als 50°C unter und um nicht mehr als 70°C über der ersten Temperatur liegt, wobei das genannte Oligomer zwischen der zweiten und einer dritten Temperatur ein thermotropes Verhalten zeigt, die dritte Temperatur mindestens 30°C oberhalb der zweiten Temperatur und mindestens etwa 10°C oberhalb der ersten Temperatur liegt, das zahlenmäßig durchschnittliche Verhältnis von Länge zu Durchmesser (L/D) des Oligomers mindestens 10 beträgt, die Einfriertemperatur des Oligomers mindestens 10°C höher ist als die des Polymers und der Small-Löslichkeitsparameter des Oligomers von dem des Polymers um höchstens 2 differiert,

wobei das Oligomere in einer solchen Menge vorhanden ist, daß es den Modul der thermoplastischen Zusammensetzung auf mindestens 110% des Moduls des Polymers bei dessen Einfriertemperatur erhöht.

2. Thermoplastische Zusammensetzung nach Anspruch 1, dadurch gekennzeichnet, daß das thermoplastische Polymer ein Poly(alkylenarylat) ist.

3. Thermoplastische Zusammensetzung nach Anspruch 2, dadurch gekennzeichnet, daß das thermoplastische Polymer Poly(alkylenetherephthalat) ist und das Alkylen 2—4 Kohlenstoffatome besitzt.

4. Thermoplastische Zusammensetzung nach Anspruch 1, 2 oder 3 dadurch gekennzeichnet, daß das Oligomer ein Polyester ist, das Reste enthält, die ausgewählt sind aus

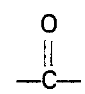 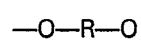 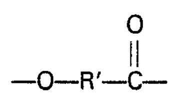 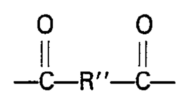

I II III IV

wobei die Molsumme von I+IV gleich der Molanzahl von II ist, und R, R′ und R″ jeweils 1,4-Phenylen, 2,5-Napthalin, 2,6-Naphthalin, 1,4-Cyclohexyl, 4,4′-Biphenyl, 2,6-Anthracen-9,10-dione oder eine diese Gruppen in mit Alkyl, Aryl, Fluor, Chlor, Brom oder Alkoxy substituierter Form ist.

5. Thermoplastische Zusammensetzung nach Anspruch 4, dadurch gekennzeichnet, daß die genannten Reste Terephthaloyl oder substituiertes Terephthaloyl, substituiertes Hydrochinon und ein zusätzliches Biphenol sind und daß R die Bedeutung 4,4′-Biphenyl oder Hydrochinon jeweils in nichtsubstituierter oder mit Methyl, Chlor oder t.Butyl substituierter Form hat.

6. Thermoplastische Zusammensetzung nach einem der vorhergehenden Ansprüche, dadurch gekennzeichnet, daß L/D zwischen 10/1 und 50/1 liegt.

7. Thermoplastische Zusammensetzung nach einem der vorhergehenden Ansprüche, dadurch gekennzeichnet, daß die Einfriertemperatur des Oligomers mindestens 20°C höher ist als die des Polymers.

8. Thermoplastische Zusammensetzung nach Anspruch 1, dadurch gekennzeichnet, daß das Polymer ein Polyamid ist.

9. Thermoplastische Zusammensetzung nach Anspruch 8, dadurch gekennzeichnet, daß das Oligomer ein thermotropes Polyester ist.

10. Thermoplastische Zusammensetzung nach Anspruch 8, dadurch gekennzeichnet, daß das Oligomer ein thermotropes Poly(esteramid) ist.

**Revendications**

1. Une composition thermoplastique qui comprend:

a) un polymère thermoplastique de poids moléculaire élevé qui a une température de fusion à une première température, qui a une température de transition vitreuse et qui forme un liquide isotrope au-dessus de la première température, et

b) dispersé dans ledit polymère thermoplastique, un oligomère qui a un point de fusion à une deuxième température, ladite deuxième température n'étant pas inférieure de plus de 50°C à ladite première température, ni supérieure de plus de 70°C à ladite première température; ledit oligomère manifestant un comportement thermotrope entre ladite deuxième température et une troisième température, ladite troisième température étant au moins supérieure de 30°C à ladite deuxième température et supérieure d'au moins environ 10°C à ladite première température; ledit oligomère ayant un rapport numérique moyen longeur/diamètre (L/D) d'au moins 10, une température de transition vitreuse supérieure d'au moins 10°C à la température de transition vitreuse dudit polymère et un paramètre de solubilité de Small écarté de 2 au plus du paramètre de solubilité de Small dudit polymère.

La quantité dudit oligomère étant suffisante pour augmenter la valeur de module de la composition thermoplastique jusqu'à au moins 110% de la valeur correspondante du polymère, à la température de transition vitreuse dudit polymère.

2. La composition thermoplastique de la revendication 1 dans laquelle ledit polymère thermoplastique est un poly(arylate d'alkylène).

3. La composition thermoplastique de la revendication 2, dans laquelle ledit polymère thermoplastique est un poly(téréphtalate d'alkylène), ledit alkylène ayant 2—4 carbones.

4. La composition thermoplastique de la revendication 1, 2 ou 3 dans laquelle ledit oligomère est un polyester qui a des résidus choisis parmi:

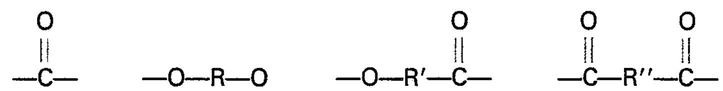

I II III IV

avec les moles de I+IV=moles de II et dans lequel R, R' et R'' sont chacun le phénylène-1,4, le naphtalène-2,5, le naphtalène-2,6, le cyclohexyl-1,4, le biphényl-4,4', l'anthracène-2,6-dione-9,10 ou l'un quelconque d'entre eux substitué par un alkyle, aryle, fluoro, chloro, bromo ou alkoxy.

5. La composition thermoplastique de la revendication 4 dans laquelle lesdits résidus sont le téréphtaloyle ou un téréphtaloyle substitué, une hydroquinone substituée et un biphénol supplémentaire dans lequel R est le biphenyl-4,4' ou l'hydroquinone, chacun non substitué ou substitué par un méthyle, chloro ou tertiobutyle.

6. La composition thermoplastique de l'une quelconque des revendications précédentes dans laquelle L/D est entre 10/1 et 50/1.

7. La composition thermoplastique de l'une quelconque des revendications précédentes, dans laquelle la température de transition vitreuse dudit oligomère est au moins supérieure de 20°C à celle dudit polymère.

8. La composition thermoplastique de la revendication 1 dans laquelle ledit polymère est un polyamide.

9. La composition thermoplastique de la revendication 8, dans laquelle ledit oligomère est un polyester thermotrope.

10. Les compositions thermoplastiques de la revendication 8 dans lesquelles ledit oligomère est un poly(ester amide) thermotrope.